# EUROPÄISCHE PATENTSCHRIFT

(11) **EP 1 371 280 B1**
(45) Veröffentlichungstag und Bekanntmachung des Hinweises auf die Patenterteilung: **04.08.2010**
(21) Anmeldenummer: 03011393.0
(22) Anmeldetag: 20.05.2003
(51) Int. Cl.: A01F 15/07

(54) **Rundballenpresse**
Rotobaler
Ramasseuse-presse à balle cylindrique

(30) Priorität: 15.06.2002 DE 10226797
(43) Veröffentlichungstag der Anmeldung: 17.12.2003
(60) Teilanmeldung: 10155683.5
(73) Patentinhaber: DEERE & COMPANY, Moline, Illinois 61265-8098 (US)
(72) Erfinder: Viaud, Jean, 70100 Gray (FR); Fournier, Jean-François, 70100 Chargey-les-Gray (FR)
(74) Vertreter: Magin, Ludwig Bernhard

(56) Entgegenhaltungen:
- EP-A- 1 264 533
- US-A- 4 956 968
- US-A- 5 129 207
- US-A- 5 243 806
- US-A- 5 581 973

## Beschreibung

Die Erfindung betrifft eine Rundballenpresse mit einem Pressraum, der von Presselementen teilweise umgeben ist, und mit einer Umhüllungsvorrichtung mit einer Trennvorrichtung und mit einer Abzugseinrichtung zum Ergreifen und Einführen einer bahnförmigen Hüllbahn in den Pressraum.

Die US-A-5,581,973 offenbart eine Rundballenpresse mit einer Umhüllungsvorrichtung, die Netz mittels eines Schwenkarms von einer Netzrolle abzieht und durch einen Spalt zwischen den Presselementen in einen Pressraum einführt. Der Schwenkarm ist mit einem federbelasteten Schnabel versehen, in dem das Netz geführt und aufgrund der Reibung gehalten wird. Bei einer ähnlichen Ausführung gemäß der US 4,956,968 sind zwar Zähne und Ausbuchtungen an den Endkanten der Schnabelteile vorgesehen; diese entfalten aber nur Wirkung, wenn von außen Kräfte auf das Netz einwirken, während die Förderung ebenfalls durch Klemmkraft erfolgt.

Das der Erfindung zugrunde liegende Problem wird darin gesehen, dass die von dem Netz ausgehende Reibkraft aufgrund der Materialbeschaffenheit schwankt und bei einem anderen Hüllmaterial niedriger oder höher ist und folglich ein zuverlässige Hüllmittelzufuhr nicht gewährleistet werden kann. Darüberhinaus ist der Aufbau komplex und aufwändig.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird die Hüllbahn formschlüssig und somit sicher erfasst, wobei die Hüllbahn ein Netz oder eine Folie sein kann. Feuchtigkeit, aufgebrachte Klebfilme, Unebenheiten und dergleichen beeinträchtigen die Zuverlässigkeit der Umhüllungsvorrichtung nicht.

Besonders effektiv sind Mitnehmer, die als Zähne, Spitzen oder dergleichen ausgebildet sind und damit sowohl leicht in die Hüllbahn eindringen als auch diese im Falle eines Netzes leicht aufgabeln können.

Wenn die Mitnehmer als Saugdüsen ausgebildet sind, kann sowohl die Haltekraft und damit auch das Maß, um das die Hüllbahn in Saugdüsen eingesogen werden, als auch der Zeitpunkt des Erfassens und des Loslassens variiert werden. Gegebenenfalls kann die Abgabe auch mittels Druckluft beschleunigt werden.

Wenig Verfahrensschritte sind erforderlich, wenn die Aufnahme der Hüllbahn im gleichen Zeitpunkt und durch dieselbe Bewegung wie deren Trennung am Umhüllungsende stattfindet.

Wenn die Abzugseinrichtung zwischen einer dem Pressraum abgelegenen und einer dem Pressraum zugelegenen Stellung verstellbar ist, ist sicher gestellt, dass sie in der Außerbetriebsstellung nicht von dem Pressgut beaufschlagt wird.

In der Zeichnung ist ein nachfolgend näher beschriebenes Ausführungsbeispiel der Erfindung dargestellt. Es zeigt:
- Fig. 1: eine Rundballenpresse in Seitenansicht und perspektivischer Darstellung mit einer Umhüllungsvorrichtung,
- Fig. 2: die Umhüllungsvorrichtung in Seitenansicht und vergrößerter Darstellung,
- Fig. 3: die Umhüllungsvorrichtung in einer zweiten Ausführungsform,
- Fig. 4: eine Abzugsvorrichtung der Umhüllungsvorrichtung in einer perspektivischen Darstellung und
- Fig. 5: die Abzugsvorrichtung der Umhüllungsvorrichtung aus Figur 4 mit anderen Mitnehmern.

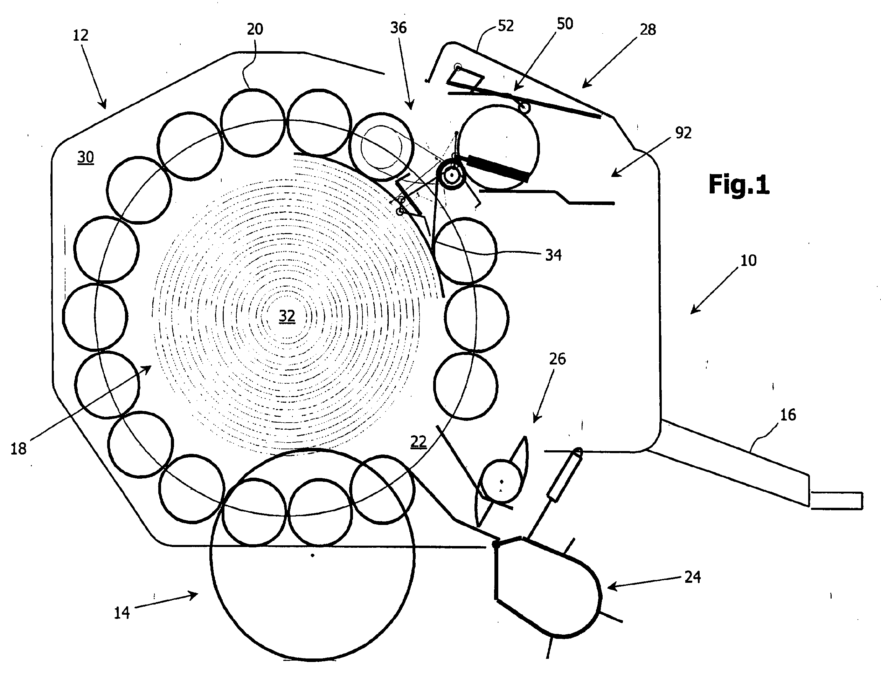

Figur 1 zeigt eine Rundballenpresse 10 mit einem Rahmen 12, einem Fahrwerk 14, einer Deichsel 16, einem Pressraum 18, Presselementen 20, einem Ernteguteinlass 22, einem Aufnehmer 24, einer Zuführvorrichtung 26 und einer Umhüllungsvorrichtung 28.

Die Rundballenpresse 10 ist abgesehen von der Umhüllungsvorrichtung 28 von herkömmlicher Bauart, in der in dem von den Presselementen 20 und Seitenwänden 30 umschlossenen Pressraum 18 ein Ballen 32 aus Erntegut, Tabak, Industriemüll, Wertstoff, etc. gebildet und anschließend mit einer als Netz, Folie oder dergleichen ausgebildeten Hüllbahn 34 umwickelt wird.

Der Rahmen 12 fasst das Fahrwerk 14, die Deichsel 16 und die Seitenwände 30 zusammen und trägt die Presselemente 20, den Aufnehmer 24, die Zuführvorrichtung 26 und die Umhüllungsvorrichtung 28.

Der Pressraum 18 ist an den Stirnseiten von den Seitenwänden 30 bedeckt und umfangsmäßig von den Presselementen 20 umschlossen - außer an dem Durchlass 22 und einer Öffnung 36 im vorderen oberen Bereich, der benachbart die Umhüllungsvorrichtung 28 vorgesehen ist. Der Pressraum 18 kann zur Abgabe des Ballens 32 geöffnet werden, in dem auf bekannte Weise ein rückwärtiger Abschnitt der Seitenwände 30 um ein oberes nicht gezeigtes Lager hochgeschwenkt wird, während ein vorderer Abschnitt starr bleibt. In dem dargestellten Ausführungsbeispiel ist der Pressraum 18 als in der Größe starr vorgesehen; statt dessen könnte auch ein größenveränderlicher Pressraum 18 verwendet werden, wie dies ebenfalls bekannt ist.

Die Presselemente 20 sind in diesem Ausführungsbeispiel als um waagrechte und quer zur Fahrtrichtung verlaufende Achsen drehbare Stahlrollen ausgebildet, deren innerste Erstreckungen auf einem Kreisbogen enden. Die Presselemente 20 grenzen sehr dicht aneinander an, und in dem Bereich des Durchlasses 22 und der Öffnung 36 besteht ein Abstand, der ungefähr dem Durchmesser eines Presselements 20 entspricht. Neun Presselemente 20 sind in dem rückwärtigen hochschwenkbaren Abschnitt der Seitenwände 30 und sieben Presselemente 20 sind in dem vorderen festen Abschnitt drehbar gelagert, was jedoch nur beispielhaft gemeint ist. Anstelle dieser Art von Presselementen 20 könnten auch Riemen, Stabkettenförderer, eine Mischung daraus und dergleichen verwendet werden, um einen starren oder einen variablen Pressraum 18 zu umgeben.

Der Durchlass 22 dient der Zufuhr des von dem Aufnehmer 24 aufgenommenen und der gegebenenfalls vorhandenen Zuführvorrichtung weitergeleiteten Pressguts in den Pressraum 18.

Die Zuführvorrichtung 26 wird nur wahlweise verwendet und kann sowohl als reiner Förderer als auch als eine Schneidvorrichtung ausgebildet sein.

Die Seitenwände 30 weisen in ihrem vorderen Bereich 92 einen größeren Abstand zueinander auf als in dem Bereich des Pressraums 18.

Die insoweit beschriebene Rundballenpresse 10 ist von herkömmlicher Bauart.

Die Umhüllungsvorrichtung 28 dient der Lagerung, Zufuhr und Trennung der Hüllbahn 34, die nach der Bildung des Ballens 32 auf dessen Umfangsfläche aufgebracht wird, damit der Ballen 32 nach dem Verlassen des Pressraums 18 nicht auseinander fällt. Zu diesem Zweck enthält die Umhüllungsvorrichtung 28 ein Lager 38, eine Rolle 40, eine Leitvorrichtung 42, eine Abzugseinrichtung 44, eine Betätigungsvorrichtung 46, Lenker 48, eine Andrückvorrichtung 50 und eine Abdeckung 52.

Das Lager 38 ist in diesem Ausführungsbeispiel als eine einfache und in einer waagrechten Ebene in dem vorderen Bereich 92 der Seitenwände 30 quer verlaufende Blechplatte ausgebildet, auf der eine Rolle 54 der Hüllbahn 34 ruht. Das Lager 38 kann auch so ausgebildet sein, dass es mehrere Rollen 54 bevorratet, dass es Stufen oder Mulden zu deren Lagesicherung aufweist und dergleichen.

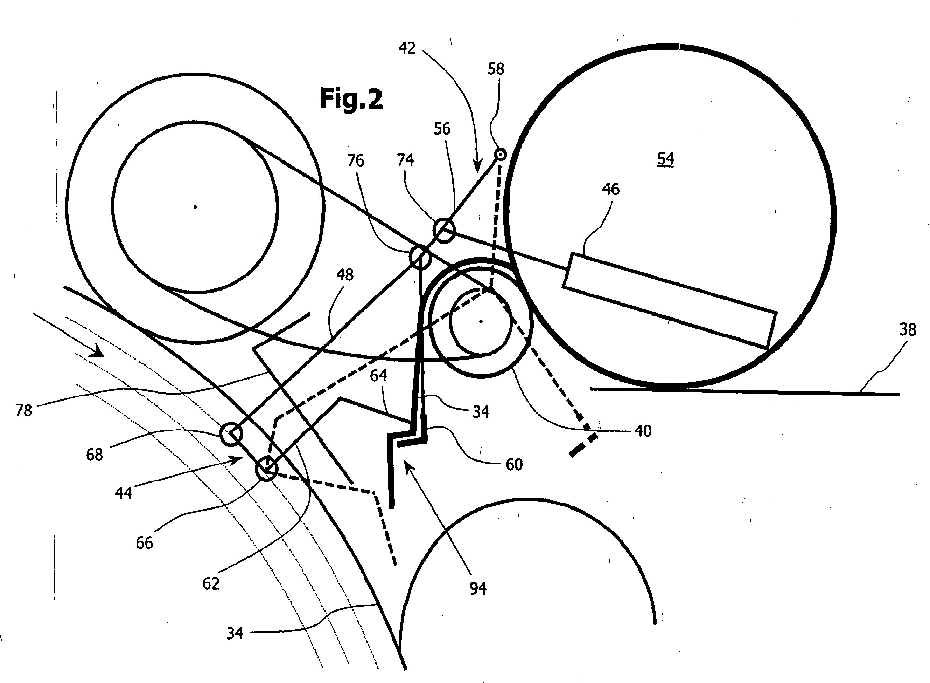

Die Rolle 40 ist auf ihrer Umfangsfläche mit einem Belag hohen Reibwerts versehen und kann mittels eines von einem Presselement 20 abgeleiteten oder mittels eines eigenen Antriebs, z. B. mittels eines Elektro- oder Hydraulikmotors in Drehung versetzt werden. Die Drehung hilft anfänglich, die Hüllbahn 34 von der Rolle 54 abzuziehen und während des Umhüllungsvorgangs infolge einer gebremsten Drehbewegung in ihr eine Spannung aufzubauen. Die Rolle 40 befindet sich oberhalb der Auflageebene des Lagers 38 und auf dessen der Öffnung 36 zugelegenen Seite. Die Rolle 54 kommt in ihrer Betriebsstellung mit einem Bereich in der 6 bis 9 Uhr Stellung mit Blick auf Figur 2 an der Rolle 40 zur Anlage und wird von der Andrückvorrichtung 50 in Kontakt mit ihr gehalten.

Die Leitvorrichtung 42 weist zwei Arme 56 auf, die in einem oberen Endbereich in einem Lager 58 an den Seitenwänden 30 in dem weiteren Bereich 92 um eine waagrechte und zu der Drehachse des Ballens 32 parallele Achse vertikal schwenkbar sind. In einem unteren Endbereich nehmen die Arme 56 zwischen sich eine Anschlagplatte 60 auf, die den gesamten Abstand zwischen den Armen 56 überbrückt, biegesteif ausgebildet ist und einen Teil einer Trennvorrichtung 94 bildet. Der seitliche Abstand der Arme 56 ist so groß, dass die Rolle 40 zwischen ihnen aufgenommen werden kann. Die Anschlagplatte 60 ist in einem unteren Endbereich um 90 Grad zu dem Pressraum 18 hin abgekantet und hält mit ihrer oberen Kante einen Abstand zu der Umfangsfläche der Rolle 40 ein. Ungefähr deckend mit der Oberkante der Rolle 40 sind die Arme 56 gebogen, so dass deren unterer Abschnitt in der in Figur 2 gezeigten Außerbetriebsstellung im Wesentlichen vertikal verläuft, während der obere Abschnitt um circa 30 Grad zur Vertikalen nach hinten und zu dem Lager 58 hin geneigt verläuft. Die Leitvorrichtung 42 ist so gelegen, dass sie insbesondere in der Außerbetriebsstellung die über die Rolle 40 ankommende Hüllbahn 34 zwischen den Armen 56 aufnehmen und über die Anschlagplatte 60 zu dem Pressraum 18 gleiten lassen kann.

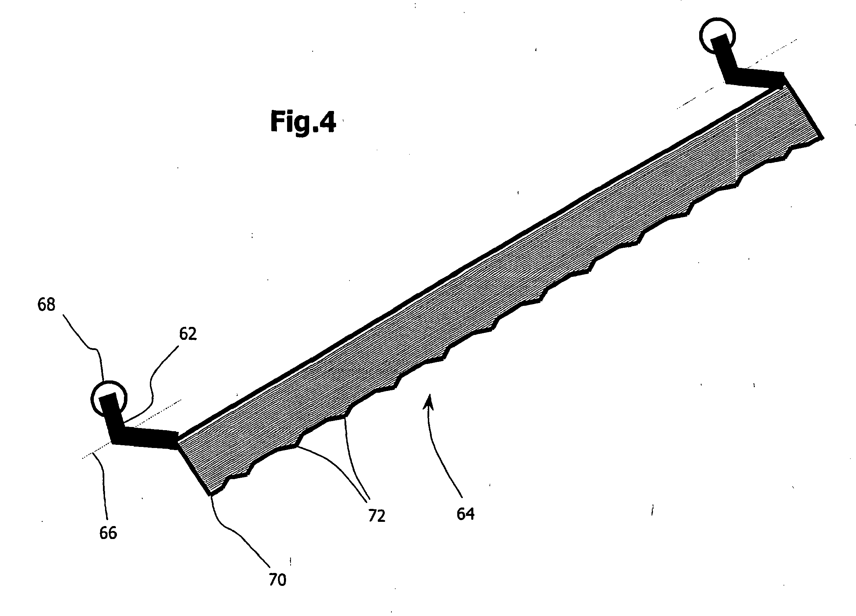

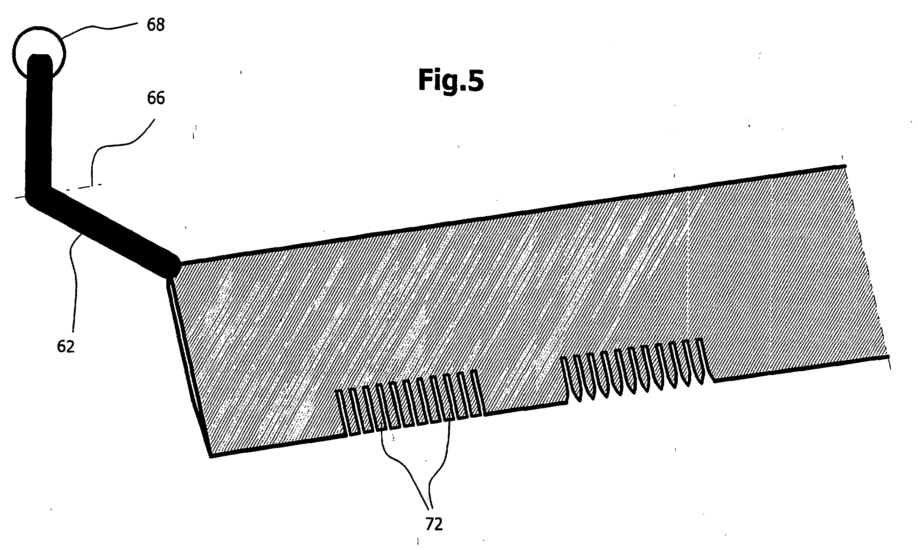

Die Abzugsvorrichtung 44 ist in den Figuren 4 und 5 als Einzelteil und vergrößerter Darstellung gezeigt und enthält zwei Arme 62 und ein Mitnehmerblech 64.

Die Arme 62 befinden sich an den Seiten der Abzugsvorrichtung 44 im Wesentlichen in derselben Ebene wie die Arme 56, verlaufen parallel zueinander und weisen zwei unter einem Winkel von circa 90 Grad verlaufende Schenkel auf. Das heißt, dass sich die Arme 62 außerhalb der Seitenwände 30 im Bereich des Pressraums 18 bewegen. In dem Knick zwischen den beiden Schenkeln sind die Arme 62 in einem Lager 66 an den Seitenwänden 30 mit einer waagrechten Lagerachse vertikal schwenkbar aufgenommen. In einem dem Pressraum 18 zugelegenen Endbereich der Arme 62 ist ein weiteres Lager 68 vorgesehen, und in dem dem Pressraum 18 abgelegenen Endbereich ist das Mitnehmerblech 64 starr an den Armen 62 unter einem Winkel von circa 75 Grad angebracht. In der Seitenansicht gemäß Figur 2 folgen die Arme 62 und das Mitnehmerblech 64 im Wesentlichen der Form eines "S".

Das Mitnehmerblech 64 erstreckt sich über den gesamten Bereich zwischen den Seitenwänden 30, ist in sich starr ausgebildet und zumindest im Wesentlichen eben. Die Breite des Mitnehmerblechs 64 entspricht der Weite des Pressraums 18. An der Vorderseite, d. h. der der Anschlagplatte 60 zugelegenen Seite, ist eine Kante 70 mit Mitnehmern 72 vorgesehen, die ein gezahntes, gezacktes oder kammartiges Profil ergeben. In 5 Figur ist ein im Wesentlichen gleiches Mitnehmerblech 64 gezeigt, das sich lediglich in der Form der Mitnehmer 72 von dem in Figur 4 unterscheidet, wobei in einem Mitnehmerblech 64 mehrere Arten von Mitnehmern 72 gezeigt sind, was zwar möglich, aber unüblich ist. Die Mitnehmer 72 werden mittels eines Stanz- oder Laserschneid- oder sonstigen formgebenden Arbeitsverfahrens in das Mitnehmerblech 64 eingearbeitet. Der Abstand der Mitnehmer 72, deren Breite und Form sind so gewählt, dass sie leicht in eine als Folie bzw. zwischen die Fäden einer als Netz ausgebildeten Hüllbahn 34 eindringen und diese nach der Zuführung in den Pressraum 18 freigeben können. Das Mitnehmerblech 64 bildet einen zweiten Teil der Trennvorrichtung 94.

Die Anordnung des Mitnehmerblechs 64 ist so gewählt, dass die Spitzen der Mitnehmer 72 nahe des Knicks in der Anschlagplatte 60 auf dieser aufstehen, wenn sich die Umhüllungsvorrichtung 28 in ihrer in der Zeichnung in durchgezogenen Linien dargestellten Außerbetriebs- oder Wartestellung befindet.

Die Betätigungsvorrichtung 46 ist in dem dargestellten Ausführungsbeispiel als ein hydraulisch oder elektrisch betätigbarer Linearmotor ausgebildet, der einenends an den Seitenwänden 30 gelagert und anderenends in einem Lager 74 an den Armen 56 der Leitvorrichtung 42 angreift.

Die Lenker 48 sind als gerade Streben oder Stangen ausgebildet, die sich zwischen einem Lager 76 im Bereich des Knicks der Arme 56 und dem Lager 68 an dem Ende der Arme 62 erstreckt und mit diesen jeweils schwenkbar verbunden ist.

Die Andrückvorrichtung 50 und die Abdeckung 52 sind in der deutschen Patentanmeldung 102 11 412 ausführlich beschrieben und dienen dazu, mittels des Gewichts der Abdeckung 52 die Rolle 54 stets in Anlage an der Rolle 40 zu halten und die Umhüllungsvorrichtung 28 gegenüber der schmutzbeladenen Umgebung zu schützen.

Zwischen den Seitenwänden 30 erstreckt sich über einen Teil der Öffnung 36 ein Deckblech, das einen Austritt von Pressgut aus dem Pressraum 18 während des Pressvorgangs verhindert, aber den Zutritt der Hüllbahn 34 zulässt.

Nach alledem ergibt sich folgende Funktion der erfindungsgemäßen Umhüllungsvorrichtung 28.

Es wird ausgegangen von einem Zustand der Rundballenpresse 10, wie er in Figur 1 gezeigt ist, d. h. ein Ballen 32 ist gebildet und fertig für den Umhüllungsvorgang. Die Umhüllungsvorrichtung 28 nimmt die in Figur 2 in ausgezogenen Linien gezeigte Stellung ein und ist noch nicht in Betrieb. Die Hüllbahn 34 liegt auf einer Rolle 54 aufgewickelt auf dem Lager 38 auf, und ein abgezogenes Teilstück von ihr liegt auf der Rolle 40 und der Anschlagplatte 60 auf und reicht bis geringfügig über die Anschlagplatte 60 hinaus. Die Spitzen der Mitnehmer 72 liegen an der Anschlagplatte 60 an und durchgreifen die Hüllbahn 34. Die Betätigungsvorrichtung 46 ist ausgefahren und die Rolle 40 ist nicht in Betrieb.

Wenn ausgehend von diesem Außerbetriebszustand der Hüllvorgang eingeleitet werden soll, wird die Betätigungsvorrichtung 46 eingefahren, was bewirkt, dass die Leitvorrichtung 42 um das Lager 58 entgegen dem Uhrzeigerdrehsinn nach unten schwenkt und dabei die Anschlagplatte 60 von den Mitnehmern 72 wegbewegt. Aufgrund der Verbindung über die Lenker 48 wird auch die Abzugseinrichtung 44 um das Lager 66 im Uhrzeigerdrehsinn nach unten schwenken und die mit ihm verhakte Hüllbahn 34 mitnehmen. Gleichzeitig wir die Rolle 40 in Drehung versetzt und unterstützt dabei die Vorschubbewegung der Hüllbahn. Anschließend wird die Rolle 40 abgebremst, damit sie auf die Hüllbahn 34 eine Bremsbewegung ausübt, um diese während des Laufs zü spannen. Wenn die Abzugseinrichtung 44 bzw. die Spitzen der Mitnehmer 72 ihre Endlage erreicht haben, befindet sich das Ende der Hüllbahn 34 im Bereich der Umfangsfläche des sich in dem Pressraum 18 drehenden Ballens 32, von dem es erfasst und mitgenommen wird. Diese Endlage ist durch die dünnen unterbrochenen Linien in der Zeichnung verdeutlicht. Sobald die Hüllbahn 34 von den über die Umfangsfläche des Ballens 32 vorstehenden Stängeln erfasst ist, wird es von ihm solange mitgenommen, bis eine ausreichende Bedeckung erreicht ist; dies ist bei circa zwei Umdrehungen des Ballens 32 der Fall. Der Wickel- oder Umhüllungsvorgang wird beendet, indem die Betätigungsvorrichtung 46 ausgefahren wird, wodurch sich die Abzugseinrichtung 44 entgegen dem Uhrzeigerdrehsinn auf die Anschlagplatte 60 zubewegt, die im Uhrzeigerdrehsinn schwenkt. Dabei drückt die Kante 70 bzw. die in ihr gebildeten Mitnehmer 72 die Hüllbahn 34 gegen die Oberfläche der Anschlagplatte 60, hält diese daran fest und bewirkt eine Spannung in ihr, die schließlich zum Abreißen führt. In dieser Situation wirken die Anschlagplatte 60 und das Mitnehmerblech 64 als die Trennvorrichtung 94 zusammen. Die Hüllbahn 34 wird entlang einer ungleichmäßigen Linie reißen und über die Anschlagplatte 60 hinaushängen. In diesem Zustand ist auch der Antrieb der Rolle 40 wieder abgeschaltet.

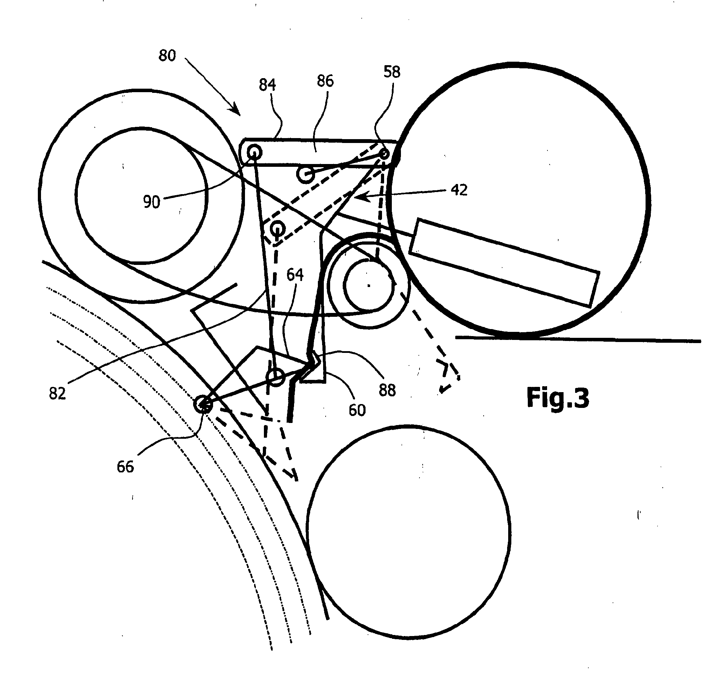

Figur 3 zeigt eine Ausführungsform der Umhüllungsvorrichtung 28, die gegenüber der in Figur 2 gezeigten geringfügig abweicht, aber demselben Prinzip folgt. Anstatt des Lenkers 48 ist ein Lenkersystem 80 vorgesehen, das einen ersten Lenker 82 und einen zweiten Lenker 84 umfasst und das von einem Mitnehmer 86 beaufschlagbar ist.

Ein weiterer Unterschied liegt darin, dass die Anschlagplatte 60 einen L-förmigen Haltewinkel 88 enthält, der parallel zu ihrer unteren Kante verläuft, und der unter einem Winkel von circa 45 Grad so auf dem unteren abgekanteten Schenkel der Anschlagplatte 60 aufliegt, dass seine Ecke die Anschlagplatte 60 berührt.

Der erste Lenker 82 greift einenends schwenkbar im Bereich des Mitnehmerblechs 64 an den verkürzten Armen 62 an, die weiterhin um das Lager 66 schwenkbar sind. Anderenends ist der erste Lenker 82 in einem Lager 90 gelenkig mit einem Endbereich des zweiten Lenkers 84 verbunden. Der andere Endbereich des zweiten Lenkers 84 ist schwenkbar in dem Lager 58 aufgenommen, um das bereits die Leitvorrichtung 42 schwenkt.

Der Mitnehmer 86 ist drehsteif mit der Leitvorrichtung 42 verbunden und liegt an der Unterseite des zweiten Lenkers 86 zwischen dessen Endbereichen an. Demnach bewirkt eine abwärts gerichtete Schwenkbewegung der Leitvorrichtung 42 auch eine Abwärtsbewegung des Mitnehmers 86, der der zweite Lenker 84 um das Lager 58 aufgrund der auf die Abzugseinrichtung 44 wirkenden Schwerkraft folgen kann. Hingegen erfolgt beim Ende des Hüllvorgangs und während der Trennung eine aktive Wirkung des Mitnehmers 86 auf die Unterseite des zweiten Lenkers 84, die diesen zwingt, nach oben zu schwenken und damit die Abzugseinrichtung 44 in Anlage an die Anschlagplatte 60 zu bringen.

## Patentansprüche

1. Rundballenpresse (10) mit einem Pressraum (18), der von Presselementen (20) teilweise umgeben ist, und mit einer Umhüllungsvorrichtung (28) mit einer Trennvorrichtung (94) und mit einer Abzugseinrichtung (44) zum Ergreifen und Einführen einer bahnförmigen Hüllbahn (34) in den Pressraum (18), **dadurch gekennzeichnet, dass** die Abzugseinrichtung (44) Mitnehmer (72) an der Vorderkante eines einzigen Mitnehmerblechs (64) aufweist, die alleine die Hüllbahn (34) mitnehmen und während und zum Zwecke der Förderung der Hüllbahn (34) in die Oberfläche der Hüllbahn (34) einbringbar sind.

2. Rundballenpresse nach Anspruch 1, **dadurch gekennzeichnet, dass** die Mitnehmer (72) als Zähne, Spitzen oder dergleichen ausgebildet sind.

3. Rundballenpresse nach Anspruch 1, **dadurch gekennzeichnet, dass** die Mitnehmer (72) als Saugdüsen ausgebildet sind.

4. Rundballenpresse nach einem oder mehreren der vorherigen Ansprüche, **dadurch gekennzeichnet, dass** die Abzugseinrichtung (44) in einer Trennstellung der Trennvorrichtung (94) mit der Hüllbahn (34) in Verbindung gebracht wird.

5. Rundballenpresse nach einem oder mehreren der vorherigen Ansprüche, **dadurch gekennzeichnet, dass** die Abzugseinrichtung (44) zwischen einer dem Pressraum (18) abgelegenen und einer dem Pressraum (18) zugelegenen Stellung verstellbar ist.

## Claims

1. Round baler (10) having a baling chamber (18), which is partially surrounded by baling elements (20), and having a wrapping device (28) having a cutting device (94) and a take-up means (44) for taking hold of and introducing a web-like wrapping web (34) into the baling chamber (18), **characterized in that** the take-up means (44) has drivers (72) on the front edge of a single driver plate (64), which alone drive the wrapping web (34) and, in order to convey the wrapping web (34) and while this takes place, can be introduced into the surface of the wrapping web (34).

2. Round baler according to Claim 1, **characterized in that** the drivers (72) are formed as teeth, spikes or the like.

3. Round baler according to Claim 1, **characterized in that** the drivers (72) are formed as suction nozzles.

4. Round baler according to one or more of the preceding claims, **characterized in that** the take-up means (44) is connected to the wrapping web (34) in a cutting position of the cutting device (94).

5. Round baler according to one or more of the preceding claims, **characterized in that** the take-up means (44) can be adjusted between a position remote from the baling chamber (18) and a position close to the baling chamber (18).

## Revendications

1. Presse à balles cylindriques (10) comprenant un espace de presse (18), qui est partiellement entouré par des éléments de presse (20), et un dispositif d'enveloppement (28) avec un dispositif de séparation (94) et un dispositif d'enlèvement (44) pour saisir et introduire une bande d'enveloppement (34) en forme de bande dans l'espace de presse (18), **caractérisée en ce que** le dispositif d'enlèvement (44) présente des dispositifs d'entraînement (72) sur l'arête avant d'une tôle d'entraînement unique (64), qui entraînent à eux seuls la bande d'enveloppement (34) et qui peuvent être introduits pendant et aux fins du transport de la bande d'enveloppement (34) dans la surface de la bande d'enveloppement (34).

2. Presse à balles cylindriques selon la revendication 1, **caractérisée en ce que** les dispositifs d'entraînement (72) sont réalisés sous forme de dents, de pointes ou similaires.

3. Presse à balles cylindriques selon la revendication 1, **caractérisée en ce que** les dispositifs d'entraînement (72) sont réalisés sous forme de buses d'aspiration.

4. Presse à balles cylindriques selon l'une quelconque ou plusieurs des revendications précédentes, **caractérisée en ce que** le dispositif d'enlèvement (44) est amené en liaison avec la bande d'enveloppement (34) dans une position de séparation du dispositif de séparation (94).

5. Presse à balles cylindriques selon l'une quelconque ou plusieurs des revendications précédentes, **caractérisée en ce que** le dispositif d'enlèvement (44) peut être réglé entre une position éloignée de l'espace de presse (18) et une position rapprochée de l'espace de presse (18).
